# EUROPÄISCHE PATENTSCHRIFT

(11) **EP 2 519 756 B1**
(45) Veröffentlichungstag und Bekanntmachung des Hinweises auf die Patenterteilung: **07.08.2013**
(21) Anmeldenummer: 10778979.4
(22) Anmeldetag: 05.11.2010
(51) Int. Cl.: F16D 55/228, F16D 55/22

(54) **BREMSSATTEL FÜR EIN FAHRZEUGBREMSSYSTEM SOWIE VERFAHREN UND VORRICHTUNG ZUM HERSTELLEN EINES BREMSSATTELS**
BRAKE CALLIPER FOR A VEHICLE BRAKE SYSTEM AND METHOD AND DEVICE FOR PRODUCING A BRAKE CALLIPER
ÉTRIER DE FREIN POUR UN SYSTÈME DE FREINAGE DE VÉHICULE ET PROCÉDÉ ET DISPOSITIF DE FABRICATION D'UN ÉTRIER DE FREIN

(30) Priorität: 30.12.2009 DE 102009055420
(43) Veröffentlichungstag der Anmeldung: 07.11.2012
(73) Patentinhaber: Robert Bosch GmbH, 70442 Stuttgart (DE)
(72) Erfinder: SCHWARZ, Guenther, 78532 Tuttlingen (DE); WILTSCH, Dieter, 74336 Brackenheim (DE)
(86) Internationale Anmeldenummer: PCT/EP2010/066891
(87) Internationale Veröffentlichungsnummer: WO 2011/079995

(56) Entgegenhaltungen:
- EP-A1- 1 548 316
- WO-A1-2007/000780
- DE-A1- 4 430 957
- JP-A- 8 210 394
- US-B1- 6 564 856

## Beschreibung

### Stand der Technik

Die Erfindung betrifft einen Bremssattel für ein Fahrzeugbremssystem nach der Gattung des unabhängigen Patentanspruchs 1 sowie ein Verfahren zum Herstellen eines Gussteils nach der Gattung des unabhängigen Patentanspruchs 5 und eine Vorrichtung zum Herstellen eines Gussteils nach der Gattung des unabhängigen Patentanspruchs 8.

Bekannte Bremssättel für Fahrzeugbremssysteme, wie z.B aus EP-A-1548 316 bekannt, werden in der Regel als Gussteile mit groben Führungsstrukturen für die Bremskolben hergestellt. Diese groben Führungsstrukturen werden anschließend durch entsprechende Maschinen- bzw. Herstellungsprozesse nachbearbeitet, um eine gewünschte Fertigungsgüte für die Führungsstrukturen zu erzielen. Da beim Gießprozess im Gussteil entstehende Lunker das Einbringen der Führungsstrukturen mit der definierten Fertigungsgüte negativ beeinflussen, kann sich eine erhebliche Ausschussrate ergeben.

### Offenbarung der Erfindung

Der erfindungsgemäße Bremssattel für ein Fahrzeugbremssystem mit den Merkmalen des unabhängigen Patentanspruchs 1 hat demgegenüber den Vorteil, dass die mindestens eine Führungsstruktur im als Gussteil hergestellten Gehäuse durch mindestens ein vorgefertigtes Einlegteil mit einer definierten Fertigungsgüte ausgebildet ist, welches vom Gussmaterial des Gehäuses umgossen ist. Durch das vorgefertigte Einlegteil ist es in vorteilhafter Weise möglich, die Führungsstruktur unabhängig vom Gießprozess mit einer definierten Fertigungsgüte auszuführen.

Ein Verfahren zum Herstellen eines Gussteils mit mindestens einer Führungsstruktur mit den Merkmalen des unabhängigen Patentanspruchs 5 weist den Vorteil auf, dass die mindestens eine Führungsstruktur mit einer definierten Fertigungsgüte durch mindestens ein vorgefertigtes Einlegteil in das Gussteil eingebracht wird, wobei das mindestens eine Einlegteil über mindestens ein Positionierungsmittel im Gusswerkzeug positioniert wird. Während des Gießprozesses werden die verbleibenden Hohlräume innerhalb des Gusswerkzeugs mit einer Schmelze ausgegossen. Nach dem Gießprozess werden das Gusswerkzeug und die Positionierungsmittel entfernt und das Gussteil mit der mindestens einen Führungsstruktur mit der definierten Fertigungsgüte kann entnommen werden.

Eine Vorrichtung zum Herstellen eines Gussteils mit mindestens einer Führungsstruktur mit den Merkmalen des unabhängigen Patentanspruchs 8 weist den Vorteil auf, dass mindestens ein vorgefertigtes Einlegteil zum Einbringen der mindestens einen Führungsstruktur mit einer definierten Fertigungsgüte in das Gussteil über mindestens ein Positionierungsmittel im Gusswerkzeug positioniert ist, wobei die verbleibenden Hohlräume innerhalb des Gusswerkzeugs während des Gießprozesses mit einer Schmelze ausgießbar sind, und wobei nach dem Gießprozess die mindestens eine Gussform und die Positionierungsmittel entfernbar sind und das Gussteil mit der mindestens einen Führungsstruktur mit der definierten Fertigungsgüte entnehmbar ist.

Das erfindungsgemäße Verfahren und die erfindungsgemäße Vorrichtung werden vorzugsweise zur Herstellung eines erfindungsgemäßen Bremssattels verwendet.

Durch die Verwendung von vorgefertigten Einlegteilen kann die gewünschte Fertigungsgüte der Führungsstruktur in vorteilhafter Weise ohne aufwändige und schwierige Nachbearbeitung einer Grobstruktur einfach und kostengünstig vor dem Gießvorgang umgesetzt werden. Zudem ermöglichen Ausführungsformen der Erfindung in vorteilhafter Weise eine Verbesserung der Effizienz bei der Herstellung von Gussteilen, die mindestens eine Führungsstruktur mit einer definierten Fertigungsgüte aufweisen, da die Ausschussrate deutlich reduziert werden kann, weil beim Gießprozess entstehende Lunker im Gussteil das Einbringen der mindestens einen Führungsstruktur mit der definierten Fertigungsgüte nicht negativ beeinflussen können. Zudem können die Führungsflächen im Einlegteil durch die Vorfertigung glatter und gleichmäßiger hergestellt werden. Zudem können Aufnahmenuten für Dichtungen und Befestigungs- und/oder Schutzmanschetten über das Einlegteil einfacher und schneller in das Gussteil eingebracht werden, als durch schwierige nach dem Gießprozess ausgeführte Maschinen- bzw. Herstellungsprozesse mit komplizierten Werkzeugformen, wie beispielsweise abgewinkelten Fräsköpfen.

Durch die in den abhängigen Ansprüchen aufgeführten Maßnahmen und Weiterbildungen sind vorteilhafte Verbesserungen des im unabhängigen Patentanspruch 1 angegebenen Bremssattels für ein Fahrzeugbremssystem, des im unabhängigen Patentanspruch 5 angegebenen Verfahrens zum Herstellen eines Gussteils mit mindestens einer Führungsstruktur, und der im unabhängigen Patentanspruch 8 angegebenen Vorrichtung zum Herstellen eines Gussteils mit mindestens einer Führungsstruktur möglich.

Besonders vorteilhaft ist, dass das mindestens eine vorgefertigten Einlegteil als Zylinderbuchse und/oder als Tiefziehhülse ausgeführt ist. Die Ausführung des Einlegteils als Zylinderbuchse ermöglicht eine besonders einfache Umsetzung der Führungsstruktur mit der definierten Fertigungsgüte. Zudem kann durch die Verwendung einer offenen Zylinderbuchse anstatt eines Sackloches ohne direkten Zugriff die Handhabung und die nachfolgende weitere Montage von Komponenten, wie den Bremskolben, Kolbendichtungen usw. vereinfacht werden. Zudem kann eine Nut zur Führung bzw. Aufnahme von Dichtungen und/oder Befestigungs- und/oder Schutzmanschetten einfach am Außendurchmesser der Zylinderbuchse angeordnet werden. Zur besseren Positionierung und/oder Fixierung im Gussteil weisen die Zylinderbuchsen an ihrer äußeren Konturen Erhebungen und Vertiefungen in Form von Rillen, Ritzen usw. auf. Zur Fertigung der Tiefziehhülse wird der Hülsenboden aus einer Blechtafel tiefgezogen und der Hülsenschaft anschließend ausgestanzt. Das Restblech wird beispielsweise zweimal gefaltet und kann als Auskragung zur Führung bzw. Aufnahme von Dichtungen und/oder Befestigungs- und/oder Schutzmanschetten verwendet werden. Am Boden des als Tiefziehteils vorgefertigten Einlegteils kann zusätzlich eine mit dem Hohlraum des Tiefziehteils verbundene Bremsleitung befestigt werden. Dadurch können die hydraulischen Dichtigkeitsanforderungen an das Gussgehäuse in vorteilhafter Weise entfallen, da das Bremsfluid nicht mehr mit dem Gussgehäuse in Berührung kommt.

In Ausgestaltung des erfindungsgemäßen Bremssattels sind im Gehäuse mindestens zwei Führungsstrukturen vorgesehen, die koaxial zueinander mit einem definierten Abstand in gegenüberliegenden Gehäuseteilen des Gehäuses angeordnet sind. Die Führungsstrukturen sind paarweise einander gegenüberliegend angeordnet, um eine gleichmäßige Belastung der Bremsscheibe während des Bremsvorgangs zu erreichen.

In Ausgestaltung des erfindungsgemäßen Verfahrens wird die Führungsstruktur des mindestens einen vorgefertigten Einlegteils mit einer Endgüte gefertigt und mit mindestens einem Gusskern so zu einem Verbund angeordnet, dass alle mit Endgüte gefertigten Führungsflächen des mindestens einen Einlegteils von dem mindestens einen Gusskern bedeckt werden. Dadurch werden die mit Endgüte gefertigten Führungsflächen in vorteilhafter Weise während des Gießprozesses vor der Schmelze geschützt.

In weiterer Ausgestaltung des erfindungsgemäßen Verfahrens wird der mindestens eine Gusskern auf einen mit dem Gusswerkzeug verbundenen Kernlagerschaft positioniert und fixiert, wobei zur Fertigung eines Gussteils mit zwei koaxial gegenüberliegend angeordneten Führungsstrukturen ein erster Verbund aus einem ersten vorgefertigten Einlegteil und einem ersten Gusskern und ein zweiter Verbund aus einem zweiten vorgefertigten Einlegteil und einem zweiten Gusskern auf dem Kernlagerschaft positioniert und fixiert werden. Dies ermöglicht in vorteilhafter Weise eine einfache und schnelle Positionierung der vorgefertigten Einlegteile, so dass eine sehr genauem koaxiale Anordnung der gegenüberliegenden Führungsstrukturen möglich ist, um im bestimmungsgemäßen Bremsbetrieb eine gleichmäßige Belastung der Bremsscheibe während des Bremsvorgangs zu erreichen.

In Ausgestaltung der erfindungsgemäßen Vorrichtung ist das mindestens eine vorgefertigte Einlegteil mit einer Endgüte gefertigt und bildet einen Verbund mit mindestens einem Gusskern, welcher alle Führungsflächen des Einlegteils bedeckt, um die mit Endgüte gefertigten Führungsfläche in vorteilhafter Weise während des Gießprozesses vor der Schmelze zu schützen. Der mindestens eine Gusskern ist beispielsweise auf einem Führungsschaft positioniert und fixiert, der an beiden Enden in einer ersten Gussform des Gusswerkzeugs fixiert ist. Durch die beidseitige Fixierung kann in vorteilhafter Weise eine Lageverschiebung während des Gießprozesses verhindert werden. Zur Fertigung eines Gussteils mit zwei koaxial gegenüberliegend angeordneten Führungsstrukturen sind ein erster Verbund aus einem ersten vorgefertigten Einlegteil und einem ersten Gusskern und ein zweiter Verbund aus einem zweiten vorgefertigten Einlegteil und einem zweiten Gusskern auf dem Kernlagerschaft positioniert und fixiert. Hierbei weist der Kernlagerschaft mindestens zwei verschiedene Außendurchmesser auf, die mit verschiedenen Innendurchmessern der Gusskerne korrespondieren, wobei zuerst der erste Gusskern mit dem größeren Innendurchmesser auf den Kernlagerschaft aufgeschoben und mit ersten Fixiermitteln axial auf dem Kernlagerschaft fixiert ist und der zweite Gusskern mit dem kleineren Innendurchmesser bis zum Anschlag an einem Absatz am Übergang zwischen den verschiedenen Außendurchmessern auf den Kernlagerschaft aufgeschoben und mit zweiten Fixiermitteln auf dem Kernlagerschaft fixiert ist. Die Verwendung von verschiedenen Durchmessern erleichtert durch die entstehenden Absätze die axiale Positionierung und Fixierung der Gusskerne.

Vorteilhafte Ausführungsformen der Erfindung sind in den Zeichnungen dargestellt und werden nachfolgend beschrieben.

Kurze Beschreibung der Zeichnungen
Fig. 1 zeigt eine schematische Schnittdarstellung eines Gusswerkzeugs mit einem ersten Ausführungsbeispiel eines zu gießenden Gehäuses für einen Bremssattel.
Fig. 2 zeigt eine schematische Schnittdarstellung eines Ausschnitts eines zweiten Ausführungsbeispiels eines zu gießenden Gehäuses für einen Bremssattel.

### Ausführungsformen der Erfindung

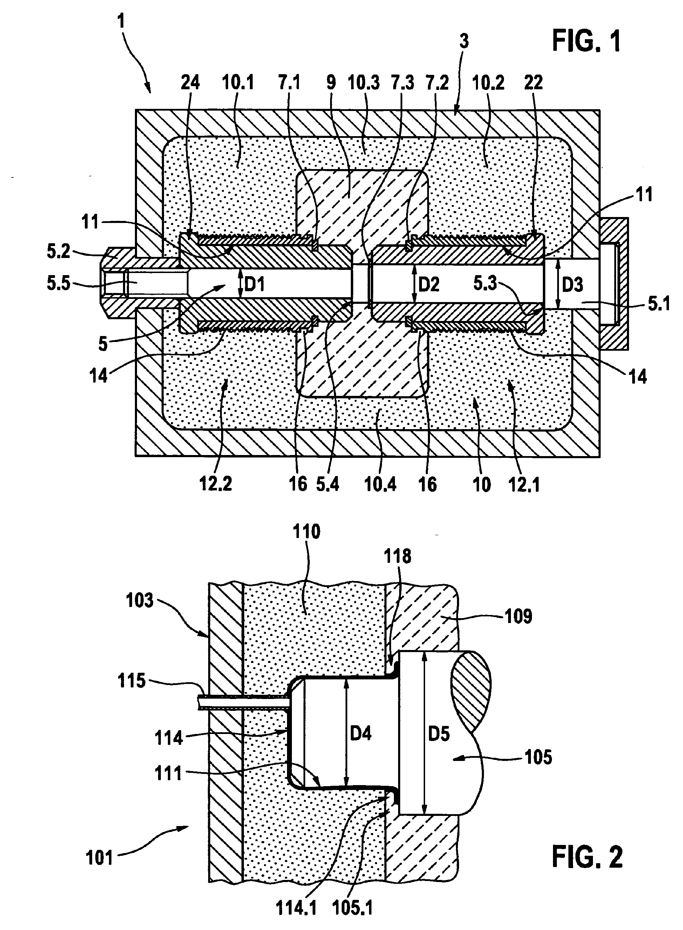

Wie aus Fig. 1 ersichtlich ist, umfasst eine Vorrichtung zum Herstellen eines Bremssattels, welcher ein Gussgehäuse 10 mit zwei Führungsstrukturen 11 zur Aufnahme von korrespondierenden Bremskolben umfasst. Die Vorrichtung umfasst ein Gusswerkzeug 1, welches mehrere Gussformen umfasst, von denen eine nach unten offene untere Gussform 3 zur Vorgabe von Außenkonturen des Gussgehäuses 10 des Bremssattels sichtbar ist. Im Inneren der unteren Gussform 3 ist ein Außenkonturgusskern 9 zur weiteren Vorgabe von Außenkonturen des Gussgehäuses 10 des Bremssattels angeordnet.

Wie aus Fig. 1 weiter ersichtlich ist, weist das Gehäuse 10 des dargestellten ersten Ausführungsbeispiel des erfindungsgemäßen Bremssattels für ein Fahrzeugbremssystem zwei über Stege 10.3. 10.4 verbundene einander gegenüberliegende Gehäuseteile 10.1, 10.2 auf, in welchen jeweils eine Führungsstruktur 11 zur Aufnahme eines korrespondierenden Bremskolbens vorgesehen ist. Erfindungsgemäß bildet jeweils ein vorgefertigtes Einlegteil 14 die Führungsstruktur mit einer definierten Fertigungsgüte 11 im Gehäuse 10 aus, wobei die vorgefertigten Einlegteile 14 vom Gussmaterial des Gehäuses 10 umgossen sind. Im dargestellten ersten Ausführungsbeispiel sind die vorgefertigten Einlegteile 14 jeweils als Zylinderbuchse 14 ausgeführt, an deren Außenkontur zur besseren Positionierung und/oder Fixierung im Gussgehäuse 10 Erhebungen und Vertiefungen in Form von Rillen, Ritzen usw. angeordnet sind. Zudem ist im über das Gussgehäuse 10 hervorstehende Teil der Zylinderbuchse eine Nut 16 zur Führung bzw. Aufnahme von Dichtungen und/oder Befestigungs- und/oder Schutzmanschetten angeordnet. Die vorgefertigten Einlegteile 14 zum Einbringen der Führungsstrukturen mit definierter Fertigungsgüte in das Gussteil 10 sind über mindestens ein Positionierungsmittel im Gusswerkzeug 1 positioniert. Im dargestellten Ausführungsbeispiel umfassen diese Positionierungsmittel zwei zylindrische Gusskerne 22, 24, die jeweils mit einem als Hülse ausgeführten Einlegteil 14 einen Verbund bilden, welcher so ausgeführt ist, dass alle Führungsflächen 11 des jeweiligen Einlegteils 14 vom korrespondierenden Gusskern 22, 24 bedeckt sind. Dabei bilden ein erstes vorgefertigtes Einlegteil 14 und ein erster Gusskern 22 einen ersten Verbund 12.1, und ein zweites vorgefertigtes Einlegteil 14 und ein zweiter Gusskern 24 bilden einen zweiten Verbund 12.2. Hierbei ist das jeweilige vorgefertigte Einlegteil 14 bis zum Anschlag an einem überstehenden Rand auf den jeweiligen Gusskern 22, 24 aufgesteckt und durch entsprechende Fixierungsmittel 7.1, 7.2 axial fixiert, welche beispielsweise als Sprengringe ausgeführt sind.

Wie aus Fig. 1 weiter ersichtlich ist, sind die Gusskerne 22, 24 mit den vorgefertigten Einlegteilen 14 auf einem Kernlagerschaft 5 positioniert und fixiert, der an beiden Enden in der ersten Gussform 3 des Gusswerkzeugs 1 fixiert ist. An einem Ende ist der Kernlagerschaft 5 über ein Kopfstück 5.1 in einer entsprechenden Aufnahme in der ersten Gussform 3 axial fixiert. Am anderen Ende weist der Kernlagerschaft 5 ein Gewinde 5.5 auf, auf welches eine Befestigungsmutter 5.2 aufgeschraubt ist, welche gleichzeitig den zweiten Gusskern 24 axial auf dem Kernlagerschaft 5 fixiert. Durch die Befestigungsmutter 5.2 können in vorteilhafter Weise axiale Toleranzen kompensiert werden. Alternativ kann auch an diesem Ende ein Kopfstück vorgesehen werden. Der Kernlagerschaft 5 weist im dargestellten Ausführungsbeispiel drei verschiedene Außendurchmesser D1, D2, D3 auf. Hierbei korrespondierte ein erster Außendurchmesser D1 mit einem Innendurchmesser D1 des zweiten Gusskerns 24, ein zweiter Außendurchmesser D2 korrespondiert mit einem Innendurchmesser D2 des ersten Gusskerns 22 und ein dritter Außendurchmesser D3 korrespondiert mit eine entsprechenden Öffnung in der ersten Gussform 3.

Wie aus Fig. 1 weiter ersichtlich ist, ist der erste Gusskern 22 mit dem größeren Innendurchmesser D2 bis zum Anschlag an einem ersten Absatz 5.3, der am Übergang zwischen dem zweiten und dritten Außendurchmesser D2 und D3 entsteht, auf den Kernlagerschaft 5 aufgeschoben und mit einem zweiten Fixiermitteln 7.3 axial auf dem Kernlagerschaft 5 fixiert, wobei das zweite Fixiermittel ebenfalls als Sprengring ausgeführt sein kann. Der zweite Gusskern 24 mit dem kleineren Innendurchmesser D1 ist bis zum Anschlag an einem zweiten Absatz 5.4 am Übergang zwischen dem ersten und zweiten Außendurchmesser D1 und D2 auf den Kernlagerschaft 5 aufgeschoben und axial über die Befestigungsmutter auf dem Kernlagerschaft 5 fixiert. Zwischen den beiden Gehäuseteilen 10.1, 10.2 und den beiden Stegen 10.3, 10.4 ist im Inneren der unteren Gussform 3 der Außenkonturgusskern 9 zur weiteren Vorgabe von Außenkonturen des Gussgehäuses 10 des Bremssattels angeordnet.

Zur Herstellung des Gussgehäuses 10 werden die verbleibenden Hohlräume innerhalb des Gusswerkzeugs 1 während des Gießprozesses mit einer Schmelze ausgegossen, wobei nach dem Gießprozess die Gussform 3, der Außenkonturgusskern 9, die beiden Gusskerne 22, 24 und der Kernlagerschaft 5 entfernt werden, so dass das Gussteil 10 mit den beiden Führungsstrukturen 11 mit definierter Fertigungsgüte entnommen werden kann.

Wie aus Fig. 2 ersichtlich ist, ist im dargestellten zweiten Ausführungsbeispiel ein vorgefertigtes Einlegteil als Tiefziehhülse 114 ausgeführt. Zur Fertigung der Tiefziehhülse 114 wird der Hülsenboden aus einer Blechtafel tiefgezogen und der Hülsenschaft anschließend ausgestanzt. Das Restblech wird beispielsweise zweimal gefaltet, um eine Auskragung 114.1 zu erzeugen. Zwischen der Auskragung 114.1 und dem Gussgehäuse 110 des Bremssattels entsteht ein Aufnahmespalt 118 zur Führung bzw. Aufnahme von Dichtungen und/oder Befestigungs- und/oder Schutzmanschetten. Das vorgefertigte als Tiefziehhülse ausgeführte Einlegteile 114 zum Einbringen der Führungsstrukturen mit definierter Fertigungsgüte in das Gussgehäusesteil 110 ist über mindestens ein Positionierungsmittel in einer Gussform 103 des Gusswerkzeugs 101 positioniert. Im dargestellten zweiten Ausführungsbeispiel umfassen diese Positionierungsmittel einen zylindrischen Gusskern105 mit zwei verschiedenen Außendurchmessern D4, D5, wobei ein kleinerer Außendurchmesser D4 auf den Innendurchmesser des Einlegteils 114 abgestimmt ist, und wobei die Auskragung 114.1 des Einlegteils 114 am Absatz 105.1 zwischen dem kleineren und größeren Außendurchmesser D4 und D5 anliegt. Auch hier bedeckt der Gusskern 105 die Führungsflächen 111 des Einlegteils 114, um diese vor eindringender Schmelze während des Gießprozesses zu schützen.

Wie aus Fig. 2 weiter ersichtlich ist, ist am Boden des als Tiefziehteils vorgefertigten Einlegteils 114 zusätzlich eine mit dem Hohlraum des Tiefziehteils 114 verbundene Bremsleitung beispielsweise durch Schweißen befestigt. Dadurch können die hydraulischen Dichtigkeitsanforderungen an das Gussgehäuse 110 in vorteilhafter Weise entfallen, da das Bremsfluid nicht mehr mit dem Gussgehäuse 110 in Berührung kommt.

In Ausführungsformen der Erfindung kann die gewünschte Fertigungsgüte der Führungsstruktur in einem Gussteil in vorteilhafter Weise ohne aufwändige und schwierige Nachbearbeitung einer Grobstruktur einfach und kostengünstig vor dem Gießvorgang umgesetzt werden. Zudem ermöglichen Ausführungsformen der Erfindung in vorteilhafter Weise eine Verbesserung der Effizienz bei der Herstellung von Gussteilen, die mindestens eine Führungsstruktur mit einer definierten Fertigungsgüte aufweisen, da die Ausschussrate deutlich reduziert werden kann.

## Patentansprüche

1. Bremssattel für ein Fahrzeugbremssystem mit einem als Gussteil hergestellten Gehäuse (10, 110), in welchem mindestens eine Führungsstruktur (11, 111) zur Aufnahme eines korrespondierenden Bremskolbens vorgesehen ist, **dadurch gekennzeichnet, dass** die mindestens eine Führungsstruktur (11, 111) im Gehäuse (10, 110) durch mindestens ein vorgefertigtes Einlegteil (14, 114) mit einer definierten Fertigungsgüte ausgebildet ist, welches vom Gussmaterial des Gehäuses (10, 110) umgossen ist.

2. Bremssattel nach Anspruch 1, **dadurch gekennzeichnet, dass** das mindestens eine vorgefertigte Einlegteil (14, 114) als Zylinderbuchse (14) und/oder als Tiefziehhülse (114) ausgeführt ist.

3. Bremssattel nach Anspruch 2, **dadurch gekennzeichnet, dass** am Boden des als Tiefziehhülse (114) vorgefertigten Einlegteils eine mit dem Hohlraum der Tiefziehhülse (114) verbundene Bremsleitung (115) befestigt ist.

4. Bremssattel nach einem der Ansprüche 1 bis 3, **dadurch gekennzeichnet, dass** im Gehäuse (10) mindestens zwei Führungsstrukturen (11) vorgesehen sind, die koaxial zueinander mit einem definierten Abstand in gegenüberliegenden Gehäuseteilen (10.1, 10.2) des Gehäuses (10) angeordnet sind.

5. Verfahren zum Herstellen eines Gussteils mit mindestens einer Führungsstruktur (11, 111) zur Herstellung des Bremssattels nach einem Ansprüche 1 bis 4, **dadurch gekennzeichnet, dass** die mindestens eine Führungsstruktur (11, 111) mit einer definierten Fertigungsgüte durch mindestens ein vorgefertigtes Einlegteil (14, 114) in das Gussteil (10, 110) eingebracht wird, wobei das mindestens eine Einlegteil (14, 114) über mindestens ein Positionierungsmittel (5, 22, 24, 105) im Gusswerkzeug (1, 101) positioniert wird, wobei während des Gießprozesses die verbleibenden Hohlräume innerhalb des Gusswerkzeugs (1, 101) mit einer Schmelze ausgegossen werden, wobei nach dem Gießprozess das Gusswerkzeug (1, 101) und die Positionierungsmittel (5, 22, 24, 105) entfernt werden und das Gussteil (10, 110) mit der mindestens einen Führungsstruktur (11, 111) mit der definierten Fertigungsgüte entnommen wird.

6. Verfahren nach Anspruch 5, **dadurch gekennzeichnet, dass** die Führungsstruktur (11, 111) des mindestens einen vorgefertigten Einlegteils (14, 114) mit einer Endgüte gefertigt wird und mit mindestens einem Gusskern (22, 24, 105) so zu einem Verbund (12.1, 12.2) angeordnet wird, dass alle mit Endgüte gefertigten Führungsflächen (11, 111) des mindestens einen Einlegteils (14, 114) von dem mindestens einen Gusskern (22, 24, 105) bedeckt werden.

7. Verfahren nach Anspruch 6, **dadurch gekennzeichnet, dass** der mindestens eine Gusskern (22, 24) auf einen mit dem Gusswerkzeug (1) verbundenen Kernlagerschaft (5) positioniert und fixiert wird, wobei zur Fertigung eines Gussteils (10) mit zwei koaxial gegenüberliegend angeordneten Führungsstrukturen (11) ein erster Verbund (12.1) aus einem ersten vorgefertigten Einlegteil (14) und einem ersten Gusskern (22) und ein zweiter Verbund (12.2) aus einem zweiten vorgefertigten Einlegteil (14) und einem zweiten Gusskern (24) auf dem Kernlagerschaft (5) positioniert und fixiert werden.

8. Vorrichtung zum Herstellen eines Gussteils, das mindestens eine Führungsstruktur (11, 111) aufweist zur Herstellung des Bremssattels nach einem Ansprüche 1 bis 4, mit einem Gusswerkzeug (1, 101), welches mindestens eine Gussform (3, 9, 103, 109) zur Vorgabe von Außenkonturen des Gussteils (10, 110) aufweist, **dadurch gekennzeichnet, dass** mindestens ein vorgefertigtes Einlegteil (14, 114) zum Einbringen der mindestens einen Führungsstruktur (11, 111) mit einer definierten Fertigungsgüte in das Gussteil (10, 110) über mindestens ein Positionierungsmittel (5, 22, 24, 105) im Gusswerkzeug (1, 101) positioniert ist, wobei die verbleibenden Hohlräume innerhalb des Gusswerkzeugs (1, 101) während des Gießprozesses mit einer Schmelze ausgießbar sind, und wobei nach dem Gießprozess die mindestens eine Gussform (3, 9, 103, 109) und die Positionierungsmittel (5, 22, 24, 105) entfernbar sind und das Gussteil (10, 110) mit der mindestens einen Führungsstruktur (11, 111) mit der definierten Fertigungsgüte entnehmbar ist.

9. Vorrichtung nach Anspruch 8, **dadurch gekennzeichnet, dass** das mindestens eine vorgefertigte Einlegteil (14) mit einer Endgüte gefertigt ist und einen Verbund (12.1, 12.2) mit mindestens einem Gusskern (22, 24) bildet, welcher alle Führungsflächen (11) des Einlegteils (14) bedeckt, wobei der mindestens eine Gusskern (22, 24) auf einem Führungsschaft (5) positioniert und fixiert ist, der an beiden Enden in einer ersten Gussform (3) des Gusswerkzeugs (1) fixiert ist.

10. Vorrichtung nach Anspruch 9, **dadurch gekennzeichnet, dass** zur Fertigung eines Gussteils (10) mit zwei koaxial gegenüberliegend angeordneten Führungsstrukturen (11) ein erster Verbund (12.1) aus einem ersten vorgefertigten Einlegteil (14) und einem ersten Gusskern (22) und ein zweiter Verbund (12.2) aus einem zweiten vorgefertigten Einlegteil (14) und einem zweiten Gusskern (24) auf dem Kemlagerschaft (5) positioniert und fixiert sind, wobei der Kernlagerschaft (5) mindestens zwei verschiedene Außendurchmesser (D1, D2) aufweist, die mit verschiedenen Innendurchmessern (D1, D2) der Gusskerne (22, 24) korrespondieren, wobei zuerst der erste Gusskern (22) mit dem größeren Innendurchmesser (D2) auf den Kernlagerschaft (5) aufgeschoben und mit ersten Fixiermitteln (7.3) axial auf dem Kernlagerschaft (5) fixiert ist und der zweite Gusskern (24) mit dem kleineren Innendurchmesser (D1) bis zum Anschlag an einem Absatz (5.4) am Übergang zwischen den verschiedenen Außendurchmessern (D1, D2) auf den Kernlagerschaft (5) aufgeschoben und mit zweiten Fixiermitteln (5.2) auf dem Kernlagerschaft (5) fixiert ist.

## Claims

1. Brake calliper for a vehicle brake system, having a housing (10, 110) produced as a casting, in which at least one guide structure (11, 111) for accommodating a corresponding brake piston is provided, **characterized in that** the at least one guide structure (11, 111) in the housing (10, 110) is formed by at least one prefabricated insert (14, 114) with a defined production quality, which is encapsulated by the cast material of the housing (10, 110).

2. Brake calliper according to Claim 1, **characterized in that** the at least one prefabricated insert (14, 114) is embodied as a cylindrical bush (14) and/or as a deep-drawn sleeve (114).

3. Brake calliper according to Claim 2, **characterized in that** a brake line (115) is secured on the bottom of the insert prefabricated as a deep-drawn sleeve (114), said brake line being connected to the cavity of the deep-drawn sleeve (114).

4. Brake calliper according to one of Claims 1 to 3, **characterized in that** at least two guide structures (11) are provided in the housing (10), being arranged coaxially with one another at a defined spacing in opposite housing parts (10.1, 10.2) of the housing (10).

5. Method for producing a casting with at least one guide structure (11, 111) for producing the brake calliper according to one of Claims 1 to 4, **characterized in that** the at least one guide structure (11, 111) with a defined production quality is introduced into the casting (10, 110) by means of at least one prefabricated insert (14, 114), wherein the at least one insert (14, 114) is positioned in the casting tool (1, 101) using at least one positioning means (5, 22, 24, 105), wherein the remaining cavities within the casting tool (1, 101) are filled with a melt during the casting process, wherein, after the casting process, the casting tool (1, 101) and the positioning means (5, 22, 24, 105) are removed, and the casting (10, 110) with the at least one guide structure (11, 111) with the defined production quality is removed.

6. Method according to Claim 5, **characterized in that** the guide structure (11, 111) of the at least one prefabricated insert (14, 114) is produced with a final quality and is arranged with at least one casting core (22, 24, 105) to form a composite (12.1, 12.2) in such a way that all the guide surfaces (11, 111) of the at least one insert (14, 114) which are produced with the final quality are covered by the at least one casting core (22, 24, 105).

7. Method according to Claim 6, **characterized in that** the at least one casting core (22, 24) is positioned and fixed on a core support shaft (5) connected to the casting tool (1), wherein, to produce a casting (10) with two guide structures (11) arranged coaxially opposite one another, a first composite (12.1), consisting of a first prefabricated insert (14) and a first casting core (22), and a second composite (12.2), consisting of a second prefabricated insert (14) and a second casting core (24), are positioned and fixed on the core support shaft (5).

8. Device for producing a casting which has at least one guide structure (11, 111) for producing the brake calliper according to one of Claims 1 to 4, having a casting tool (1, 101), which has at least one casting mold (3, 9, 103, 109) for determining external contours of the casting (10, 110), **characterized in that** at least one prefabricated insert (14, 114) for introducing the at least one guide structure (11, 111) with a defined production quality into the casting (10, 110) is positioned in the casting tool (1, 101) using at least one positioning means (5, 22, 24, 105), wherein the remaining cavities within the casting tool (1, 101) can be filled with a melt during the casting process, and wherein, after the casting process, the at least one casting mold (3, 9, 103, 109) and the positioning means (5, 22, 24, 105) can be removed, and the casting (10, 110) with the at least one guide structure (11, 111) with the defined production quality can be removed.

9. Device according to Claim 8, **characterized in that** the at least one prefabricated insert (14) is produced with a final quality and forms a composite (12.1, 12.2) with at least one casting core (22, 24), which covers all the guide surfaces (11) of the inserts (14), wherein the at least one casting core (22, 24) is positioned and fixed on a guide shaft (5), which is fixed at both ends in a first casting mold (3) of the casting tool (1).

10. Device according to Claim 9, **characterized in that**, to produce a casting (10) with two guide structures (11) arranged coaxially opposite one another, a first composite (12.1), consisting of a first prefabricated insert (14) and a first casting core (22), and a second composite (12.2), consisting of a second prefabricated insert (14) and a second casting core (24), are positioned and fixed on the core support shaft (5), wherein the core support shaft (5) has at least two different outside diameters (D1, D2), which correspond to different inside diameters (D1, D2) of the casting cores (22, 24), wherein, first of all, the first casting core (22) having the larger inside diameter (D2) is pushed onto the core support shaft (5) and fixed axially on the core support shaft (5) with first fixing means (7.3), and the second casting core (24) having the smaller inside diameter (D1) is pushed onto the core support shaft (5) until it abuts an offset (5.4) at the transition between the different outside diameters (D1, D2), and is fixed on the core support shaft (5) with second fixing means (5.2).

## Revendications

1. Étrier de frein pour un système de freinage de véhicule, comprenant un boîtier (10, 110) fabriqué sous forme de pièce coulée, dans lequel boîtier est prévue au moins une structure de guidage (11, 111) pour la réception d'un piston de frein correspondant, **caractérisé en ce que** l'au moins une structure de guidage (11, 111) dans le boîtier (10, 110) est formée par au moins une pièce d'insertion préfabriquée (14, 114) présentant une qualité de fabrication définie, laquelle pièce d'insertion est enrobée par coulée par le matériau de coulée du boîtier (10, 110).

2. Étrier de frein selon la revendication 1, **caractérisé en ce que** l'au moins une pièce d'insertion préfabriquée (14, 114) est réalisée sous forme de douille cylindrique (14) et/ou sous forme de douille emboutie (114).

3. Étrier de frein selon la revendication 2, **caractérisé en ce qu'**une conduite de frein (115) reliée à l'espace creux de la douille emboutie (114) est fixée au fond de la pièce d'insertion préfabriquée sous forme de douille emboutie (114).

4. Étrier de frein selon l'une quelconque des revendications 1 à 3, **caractérisé en ce qu'**au moins deux structures de guidage (11) sont prévues dans le boîtier (10), lesquelles structures de guidage sont disposées de manière coaxiale les unes par rapport aux autres avec un espacement défini dans des parties de boîtier (10.1, 10.2) opposées du boîtier (10).

5. Procédé de fabrication d'une pièce coulée comprenant au moins une structure de guidage (11, 111) pour la fabrication de l'étrier de frein selon l'une quelconque des revendications 1 à 4, **caractérisé en ce que** l'au moins une structure de guidage (11, 111) présentant une qualité de fabrication définie est introduite dans la pièce coulée (10, 110) à travers au moins une pièce d'insertion préfabriquée (14, 114), l'au moins une pièce d'insertion (14, 114) étant positionnée dans l'outil de coulée (1, 101) par le biais d'au moins un moyen de positionnement (5, 22, 24, 105), une masse fondue étant coulée dans les espaces creux restants à l'intérieur de l'outil de coulée (1, 101) pendant le processus de coulée, l'outil de coulée (1, 101) et les moyens de positionnement (5, 22, 24, 105) étant enlevés après le processus de coulée et la pièce coulée (10, 110) comprenant l'au moins une structure de guidage (11, 111) et présentant la qualité de fabrication définie étant retirée.

6. Procédé selon la revendication 5, **caractérisé en ce que** la structure de guidage (11, 111) de l'au moins une pièce d'insertion préfabriquée (14, 114) est fabriquée avec une qualité finale et est disposée conjointement avec au moins un noyau de coulée (22, 24, 105) de manière à former un ensemble (12.1, 12.2) de telle sorte que toutes les surfaces de guidage (11, 111) fabriquées avec la qualité finale de l'au moins une pièce d'insertion (14, 114) sont recouvertes par l'au moins un noyau de coulée (22, 24, 105).

7. Procédé selon la revendication 6, **caractérisé en ce que** l'au moins un noyau de coulée (22, 24) est positionné et fixé sur une tige de support de noyau (5) reliée à l'outil de coulée (1), un premier ensemble (12.1) constitué d'une première pièce d'insertion préfabriquée (14) et d'un premier noyau de coulée (22) et un deuxième ensemble (12.2) constitué d'une deuxième pièce d'insertion préfabriquée (14) et d'un deuxième noyau de coulée (24) étant positionnés et fixés sur la tige de support de noyau (5) pour la fabrication d'une pièce coulée (10) comprenant deux structures de guidage (11) disposées de manière opposée et coaxiale.

8. Dispositif pour fabriquer une pièce coulée qui comprend au moins une structure de guidage (11, 111), pour la fabrication de l'étrier de frein selon l'une quelconque des revendications 1 à 4, à l'aide d'un outil de coulée (1, 101) qui présente au moins un moule de coulée (3, 9, 103, 109) pour prédéfinir des contours extérieurs de la pièce coulée (10, 110), **caractérisé en ce qu'**au moins une pièce d'insertion préfabriquée (14, 114) pour l'insertion de l'au moins une structure de guidage (11, 111) présentant une qualité de fabrication définie dans la pièce coulée (10, 110) est positionnée dans l'outil de coulée (1, 101) par le biais d'au moins un moyen de positionnement (5, 22, 24, 105), une masse fondue pouvant être coulée dans les espaces creux restants à l'intérieur de l'outil de coulée (1, 101) pendant le processus de, coulée, et l'au moins un moule de coulée (3, 9, 103, 109), et les moyens de positionnement (5, 22, 24, 105) pouvant être enlevés après le processus de coulée et la pièce coulée (10, 110) comprenant l'au moins une structure de guidage (11, 111) et présentant la qualité de fabrication définie pouvant être retirée.

9. Dispositif selon la revendication 8, **caractérisé en ce que** l'au moins une pièce d'insertion préfabriquée (14) est fabriquée avec une qualité finale et forme un ensemble (12.1, 12.2) comprenant au moins un noyau de coulée (22, 24) qui recouvre toutes les surfaces de guidage (11) de la pièce d'insertion (14), l'au moins un noyau de coulée (22, 24) étant positionné et fixé sur une tige de guidage (5) qui est fixée aux deux extrémités dans un premier moule de coulée (3) de l'outil de coulée (1).

10. Dispositif selon la revendication 9, **caractérisé en ce qu'**un premier ensemble (12.1) constitué d'une première pièce d'insertion préfabriquée (14) et d'un premier noyau de coulée (22) et un deuxième ensemble (12.2) constitué d'une deuxième pièce d'insertion préfabriquée (14) et d'un deuxième noyau de coulée (24) sont positionnés et fixés sur la tige de support de noyau (5) pour la fabrication d'une pièce coulée (10) comprenant deux structures de guidage (11) disposées de manière opposée et coaxiale, la tige de support de noyau (5) présentant au moins deux diamètres extérieurs différents (D1, D2) qui correspondent à des diamètres intérieurs différents (D1, D2) des noyaux de coulée (22, 24), le premier noyau de coulée (22) présentant le diamètre intérieur plus grand (D2) étant tout d'abord enfilé sur la tige de support de noyau (5) et étant fixé axialement sur la tige de support de noyau (5) à l'aide de premier moyens de fixation (7.3), et le deuxième noyau de coulée (24) présentant le diamètre intérieur plus petit (D1) étant enfilé sur la tige de support de noyau (5) jusqu'à venir en butée contre un épaulement (5.4) au niveau de la transition entre les diamètres extérieurs différents (D1, D2) et étant fixé sur la tige de support de noyau (5) à l'aide de deuxièmes moyens de fixation (5.2).
